# EUROPEAN PATENT APPLICATION

(11) **EP 4 678 397 A1**
(43) Date of publication of application: **14.01.2026**
(21) Application number: 24767122.5
(22) Date of filing: 05.03.2024
(51) Int. Cl.: B32B 27/00, B32B 27/18, B32B 27/20, B60R 13/04

(54) **DECORATIVE LAMINATE, DECORATIVE FILM, DECORATIVE MOLDED PRODUCT, MOBILE OBJECT, METHOD FOR MANUFACTURING DECORATIVE LAMINATE, AND METHOD FOR MANUFACTURING DECORATIVE MOLDED PRODUCT**

(30) Priority: 06.03.2023 JP 2023034026
(71) Applicant: Dai Nippon Printing Co., Ltd., Tokyo 162-8001 (JP)
(72) Inventor: AMANO, Tsuyoshi, Tokyo 162-8001 (JP); ARIYAMA, Minoru, Tokyo 162-8001 (JP); SAITOU, Nobuo, Tokyo 162-8001 (JP)
(74) Representative: Müller-Boré & Partner Patentanwälte PartG mbB
(86) International application number: PCT/JP2024/008184
(87) International publication number: WO 2024/185754

(57) **Abstract**

A decorative laminate 30 has a first surface 30A and a second surface 30B opposite to the first surface 30A. The decorative laminate 30 includes a base material layer 31, a surface layer 33 disposed nearer to the first surface 30A than the second surface 30B with respect to the base material layer 31, and a design layer 40 supported by the base material layer 31. The design layer 40 includes a glossy layer 41 including a glossy material 41b.

## Description

### Technical Field

The present disclosure relates to a decorative laminate, a decorative film including a decorative laminate, a decorative molded article including a decorative laminate, a mobile body including a decorative molded article, a method for producing a decorative laminate, and a method for producing a decorative molded article.

### Background Art

Paint such as the one described in Japanese Unexamined Patent Application Publication No. 2009-287031 is applied to an exterior member of a mobile body that is an automobile or the like. As the exterior member is coated with the paint, the mobile body exhibits an excellent appearance.

### Summary of Invention

Volatile organic compounds included in paint are emitted in a step of coating with the paint, and carbon dioxide is emitted indirectly due to energy consumption in a drying step. When an exterior member of a large mobile body such as an automobile is coated with paint, a large amount of volatile organic compounds and carbon dioxide are generated. In recent years, concern for the environment has increased. In order to reduce the amount of volatile organic compounds and carbon dioxide that are generated, it has been examined to provide a design to an exterior member or the like of a mobile body by using a decorative film having a decorative laminate. In order to provide a design to an exterior member or the like of a mobile body by using a decorative film instead of coating with paint, it is required to make a design displayed by the decorative laminate closer to a design displayed by coating with paint. An object of the present disclosure is to make a design displayed by a decorative laminate closer to a design displayed by coating with paint.

An embodiment of the present disclosure relates to the following [1] to [31].
[1] A decorative laminate having a first surface and a second surface opposite to the first surface, comprising:
   a base material layer;
   a surface layer disposed nearer to the first surface than the second surface with respect to the base material layer; and
   a design layer supported by the base material layer,
   wherein the design layer includes a glossy layer including a glossy material.
[2] The decorative laminate according to [1], wherein a thickness of the glossy layer is 100 µm or less.
[3] The decorative laminate according to [1] or [2], wherein the glossy layer further includes a colorant.
[4] The decorative laminate according to any one of [1] to [3], wherein the design layer further includes a coloring layer including a colorant.
[5] The decorative laminate according to [4], wherein the design layer further includes a transparent layer disposed between the coloring layer and the glossy layer.
[6] The decorative laminate according to any one of [1] to [5], wherein the design layer further includes a second glossy layer superposed on the glossy layer and including a glossy material.
[7] The decorative laminate according to [6], wherein a content of the glossy material in the glossy layer differs from a content of the glossy material in the second glossy layer.
[8] The decorative laminate according to [6] or [7],
   wherein the glossy layer is disposed nearer to the second surface than the first surface with respect to the second glossy layer, and
   wherein a content of the glossy material in the second glossy layer is lower than a content of the glossy material in the glossy layer.
[9] The decorative laminate according to any one of [6] to [8],
   wherein the glossy layer includes a colorant,
   wherein the second glossy layer includes a colorant, and
   wherein a content of the colorant in the glossy layer differs from a content of the colorant in the second glossy layer.
[10] The decorative laminate according to [9],
   wherein the glossy layer is disposed nearer to the second surface than the first surface with respect to the second glossy layer, and
   wherein the content of the colorant in the second glossy layer is lower than the content of the colorant in the glossy layer.
[11] The decorative laminate according to any one of [1] to [10], further comprising a concealing layer disposed nearer to the second surface than the first surface with respect to the design layer.
[12] The decorative laminate according to any one of [1] to [11], further comprising a reflective layer disposed nearer to the second surface than the first surface with respect to the design layer.
[13] The decorative laminate according to any one of [1] to [12], further comprising a backer layer disposed nearer to the second surface than the first surface with respect to the design layer.
[14] The decorative laminate according to [13], wherein the backer layer includes a colorant.
[15] The decorative laminate according to [14], wherein a color exhibited by the backer layer is a color of the same hue as or a color similar to a color exhibited by the design layer.
[16] The decorative laminate according to any one of [13] to [15], further comprising a bonding layer disposed between the backer layer and the design layer.
[17] The decorative laminate according to [16], wherein the bonding layer includes a colorant.
[18] The decorative laminate according to any one of [1] to [17], wherein the base material layer includes a colorant.
[19] The decorative laminate according to any one of [1] to [18], further comprising a cushioning layer disposed nearer to the second surface than the first surface with respect to the surface layer.
[20] A decorative laminate having a first surface and a second surface opposite to the first surface, comprising:
   a base material layer;
   a design layer disposed nearer to the second surface than the first surface with respect to the base material layer and supported by the base material layer; and
   a backer layer disposed nearer to the second surface than the first surface with respect to the design layer,
   wherein the design layer includes a coloring layer including a colorant and a glossy layer including a glossy material,
   wherein the backer layer includes a colorant, and
   wherein a color exhibited by the backer layer is a color of the same hue as or a color similar to a color exhibited by the coloring layer.
[21] A decorative film comprising:
   the decorative laminate according to any one of [1] to [20]; and
   a joining layer provided on the second surface of the decorative laminate.
[22] The decorative film according to [21], wherein the joining layer is a heat seal layer.
[23] The decorative film according to [21], wherein the joining layer is a sticky layer.
[24] A decorative film comprising:
   the decorative laminate according to any one of [1] to [20]; and
   a protective film provided on the first surface of the decorative laminate, or
   the decorative film according to any one of [21] to [23], further comprising:
      a protective film provided on the first surface of the decorative laminate.
[25] A decorative molded article comprising:
   the decorative laminate according to any one of [1] to [20] or the decorative film according to any one of [21] to [24]; and
   a molded portion disposed nearer to the second surface than the first surface.
[26] A mobile body component comprising:
   the decorative molded article according to [25]; and
   a coating component adjacent to the decorative molded article.
[27] A mobile body component comprising:
   two decorative molded articles each according to [25],
   wherein the two decorative molded articles differ from each other in at least one of an extension ratio when molded, a technique for molding, or a material of the molded portion.
[28] A mobile body comprising the decorative molded article according to [25] or the mobile body component according to [26] or [27].
[29] A decorative laminate having a first surface and a second surface opposite to the first surface, comprising:
   a base material layer;
   a surface layer disposed nearer to the first surface than the second surface with respect to the base material layer; and
   a design layer supported by the base material layer,
   wherein the design layer includes a coloring layer including a colorant.
[30] A method for producing a decorative laminate, comprising:
   a step of forming a glossy layer including a glossy material on a base material layer by printing or application; and
   a step of forming a surface layer that forms a first surface.
[31] A method for producing a decorative molded article, comprising:
   a step of vacuum molding a decorative laminate produced by using the method according to [30]; and
   a step of forming a molded portion nearer to a second surface than a first surface of the decorative laminate, the second surface being opposite to the first surface,
   wherein a content of the glossy material in the glossy layer is determined in accordance with an extension ratio by which the decorative laminate extends in the step of vacuum molding the decorative laminate.

With the present disclosure, it is possible to make a design displayed by a decorative laminate closer to a design displayed by coating with paint.

### Brief Description of Drawings

[Fig. 1] Fig. 1 is a perspective view of a mobile body including a decorative molded article.
[Fig. 2] Fig. 2 is a cross-sectional view of the decorative molded article.
[Fig. 2A] Fig. 2A is a cross-sectional view of a decorative molded article according to a modification.
[Fig. 2B] Fig. 2B is a cross-sectional view of a decorative molded article according to another modification.
[Fig. 3] Fig. 3 is a cross-sectional view of a decorative film.
[Fig. 4] Fig. 4 is a cross-sectional view of a decorative laminate according to a first example.
[Fig. 5] Fig. 5 is a cross-sectional view of a decorative laminate according to a second example.
[Fig. 6] Fig. 6 is a cross-sectional view of a design layer according to a first example.
[Fig. 7] Fig. 7 is a cross-sectional view of a design layer according to a second example.
[Fig. 8] Fig. 8 is a cross-sectional view of a design layer according to a third example.
[Fig. 9] Fig. 9 is a cross-sectional view of a design layer according to a fourth example.
[Fig. 10] Fig. 10 is a cross-sectional view of a design layer according to a fifth example.
[Fig. 11] Fig. 11 is a cross-sectional view of a design layer according to a sixth example.
[Fig. 12] Fig. 12 is a cross-sectional view of a design layer according to a seventh example.
[Fig. 13] Fig. 13 is a cross-sectional view of a design layer according to an eighth example.
[Fig. 14] Fig. 14 is a cross-sectional view of a decorative laminate according to a third example.
[Fig. 15] Fig. 15 is a cross-sectional view of a decorative laminate according to a fourth example.
[Fig. 16] Fig. 16 is a cross-sectional view of a decorative laminate according to a fifth example.
[Fig. 17] Fig. 17 is a cross-sectional view of a decorative laminate according to a sixth example.
[Fig. 18] Fig. 18 is a view for describing an example of a method for producing a decorative laminate.
[Fig. 19] Fig. 19 is a view for describing an example of a method for producing a decorative laminate.
[Fig. 20] Fig. 20 is a view for describing an example of a method for producing a decorative film.
[Fig. 21] Fig. 21 is a cross-sectional view illustrating a state in which a decorative molded article and a coating component are adjacent to each other.
[Fig. 22] Fig. 22 is a cross-sectional view illustrating a state in which two different decorative molded articles are adjacent to each other.

### Description of Embodiments

Hereafter, an embodiment of the present disclosure will be described with reference to the drawings. In the figures attached to the present description, for ease of illustration and understanding, scales, vertical-horizontal dimensional ratios, and the like may be changed or exaggerated from the actual ones. Configurations and the like illustrated in some figures may be omitted in other figures.

In the present description, terms that specify shapes, geometrical conditions, and the degrees thereof, such as "parallel", "perpendicular", and "the same"; the values of lengths and angles; and the like are not limited to have strict meanings but are interpreted to include a range with which similar functions can be expected.

In the present description, when a plurality of candidates for an upper limit value and a plurality of candidates for a lower limit value are listed regarding a parameter, the parameter may be in a numerical range that is a combination of any one of the candidates for an upper limit value and any one of the candidates for a lower limit value.

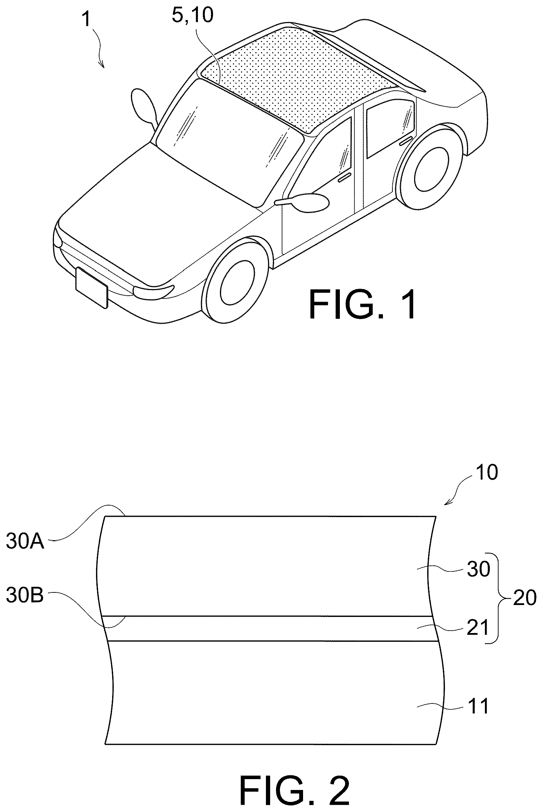

Fig. 1 illustrates a mobile body 1 according to an embodiment of the present disclosure. The mobile body 1 is a device or machine that is movable. In the example illustrated in Fig. 1, the mobile body 1 is an automobile. The mobile body 1 may be a motorcycle, a bicycle, a tricycle, a train, an aircraft, a ship, a snowmobile, an industrial robot, a drone, or the like. The automobile may be a truck, a bus, a taxi, an ambulance, a fire engine, a police car, a construction vehicle, or the like.

The mobile body 1 has a decorative molded article 10. In the example illustrated in Fig. 1, the automobile has the decorative molded article 10 as a part of an exterior member. The part of the exterior member of the automobile is, for example, at least one of a roof, a hood, a fender, a bumper, a mirror, a door, a pillar, a sill, and a trunk lid. In the illustrated example, the automobile has the decorative molded article 10 as a roof 5. The mobile body 1 may have a plurality of decorative molded articles 10.

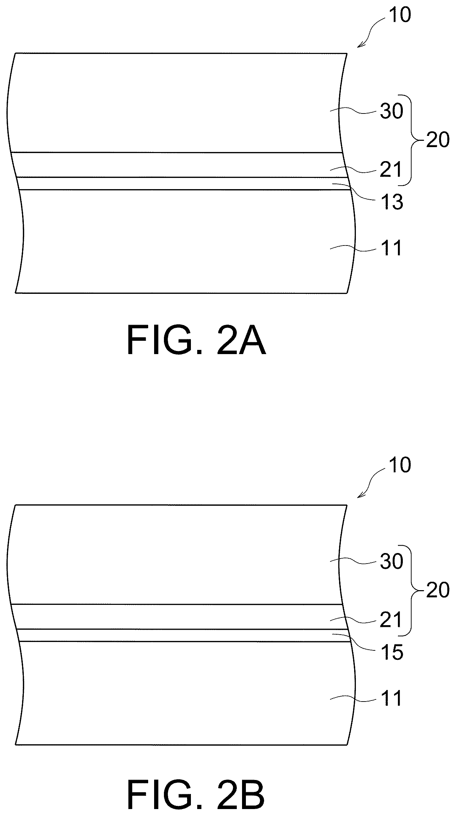

A surface of the decorative molded article 10 may include a flat portion. A surface of the decorative molded article 10 may include a curved portion. Fig. 2 illustrates a cross-sectional view of the decorative molded article 10. In Fig. 2, for ease of understanding, the decorative molded article 10 is illustrated to be flat as a whole.

As illustrated in Fig. 2, the decorative molded article 10 includes a molded portion 11 and a decorative film 20. The decorative film 20 includes a joining layer 21 and a decorative laminate 30. The decorative laminate 30 includes a first surface 30A and a second surface 30B. The decorative laminate 30 has a sheet-like shape. The first surface 30A and the second surface 30B are the main surfaces of the decorative laminate 30. The second surface 30B is a surface opposite to the first surface 30A. The joining layer 21 is provided on the second surface 30B of the decorative laminate 30. In the illustrated example, the molded portion 11 is joined to the decorative film 20 by using the joining layer 21. In the decorative molded article 10, the joining layer 21 may be omitted. The presence or absence of the joining layer 21 can be selected as appropriate in accordance with the molding technique and the combination of the material of the molded portion 11 and the material of the decorative laminate 30. The molded portion 11 is disposed nearer to the second surface 30B than the first surface 30A of the decorative laminate 30. The first surface 30A of the decorative laminate 30 forms a surface of the decorative film 20 and the decorative molded article 10.

The molded portion 11 is the main body portion of the exterior member. The molded portion 11 is a decorated member that is decorated by the decorative film 20. The molded portion 11 has the shape of at least a part of the exterior member of the mobile body 1. For example, the molded portion 11 has the shape of a roof of an automobile. The molded portion 11 is made by, for example, molding a thermoplastic material. By being molded, the molded portion 11 can have a desirable shape. Examples of the material of the molded portion 11 include a metal, glass, and a resin. Examples of the resin include an acrylic resin, a polycarbonate resin, an acrylonitrile-butadiene-styrene copolymer, a polycarbonate resin, a polypropylene resin, and a fiber-reinforced plastic.

When the molded portion 11 is provided on the decorative film 20 by insert molding (also called "film insert molding") or in-mold molding, the material of the molded portion 11 is, for example, a resin. When the molded portion 11 is provided on the decorative film 20 by TOM (Three dimension Overlay Method) molding, the material of the molded portion 11 is, for example, a metal, glass, or a resin. When the molded portion 11 is provided on the decorative film 20 by affixing, the material of the molded portion 11 is, for example, a metal, glass, or a resin.

As illustrated in Fig. 2A, when is the material of the molded portion 11 is a metal, the decorative molded article 10 may further have an electrodeposition coating film 13 as an undercoating formed between the molded portion 11 and the decorative film 20. In this case, the decorative film 20 can substitute for an intermediate coating and a top coating in existing coating. As illustrated in Fig. 2B, when the material of the molded portion 11 is a metal, the decorative molded article 10 may further have an anticorrosive plating layer 15 formed on a surface of the molded portion 11. The anticorrosive plating layer 15 may be, for example, a zinc alloy plating film or an iron-nickel alloy plating film. When the material of the molded portion 11 is a metal, the molded portion 11 may be made by applying the decorative film 20 to a molded metal plate. Alternatively, when the material of the molded portion 11 is a metal, the molded portion 11 may be made by applying the decorative film 20 to a metal plate to form a laminate metal plate and then molding the laminate metal plate.

The joining layer 21 joins the decorative film 20 to the molded portion 11. The joining layer 21 is provided on a surface of the decorative film 20. The joining layer 21 may be a heat seal layer, or may be a sticky layer. When the molded portion 11 is provided on the decorative film 20 by insert molding, it is preferable that the joining layer 21 be a heat seal layer. When the molded portion 11 is provided on the decorative film 20 by TOM molding or when the decorative film 20 is affixed to the molded portion 11, it is preferable that the joining layer 21 be a sticky layer.

The heat seal layer exhibits adhesiveness when heated, and is joined to another member. The heat seal layer exhibits appropriate adhesiveness, and has a thickness such that the decorative film 20 does not become too thick. The thickness of the heat seal layer may be 0.2 µm or more, or may be 20 µm or less. Examples of the material of the heat seal layer include a vinyl chloride-acetic acid copolymer, an acrylic resin, a polyester resin, and a urethane resin.

The sticky layer exhibits stickiness, and is joined to another member when receiving a pressure. The sticky layer exhibits appropriate stickiness, and has a thickness such that the decorative film 20 does not become too thick. The thickness of the sticky layer may be 5 µm or more, or may be 300 µm or less. Examples of the material of the sticky layer include sticky agents such as an acrylic resin, a urethane resin, a silicone resin, and rubber. In order to suppress unintended adhesion of the decorative film 20 to another member, before the decorative film 20 is joined to the molded portion 11, the sticky layer may be covered by a separator (not shown) that is peelable.

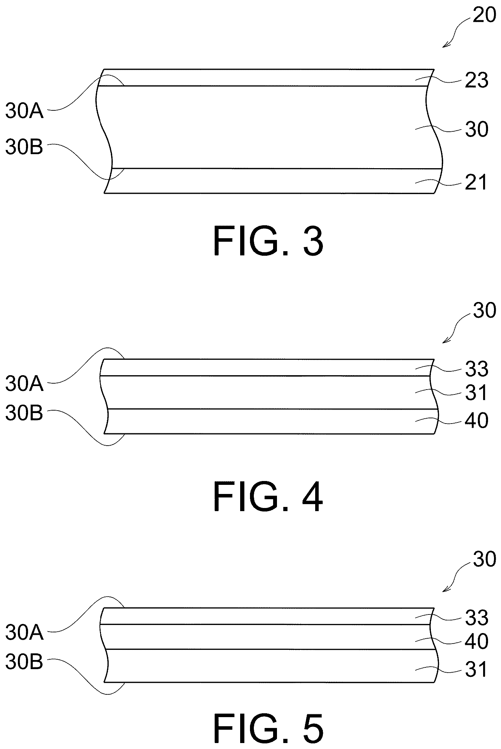

Fig. 3 illustrates a cross-sectional view of an example of the decorative film 20 before being joined to the molded portion 11. In the example illustrated in Fig. 3, the decorative film 20 includes a protective film 23. The protective film 23 is provided on the first surface 30A of the decorative laminate 30. The protective film 23 protects the first surface 30A of the decorative laminate 30. To be more specific, the protective film 23 protects a surface layer 33 (described below) disposed at the first surface 30A of the decorative laminate 30. The protective film 23 is peelable from the decorative laminate 30. The protective film 23 has a thin film-like shape. The thickness of the protective film 23 may be 10 µm or more, or may be 100 µm or less. Examples of the material of the protective film 23 include polyethylene terephthalate (PET), polyester, and polyethylene.

The decorative laminate 30 displays a design. The decorative molded article 10 including the decorative laminate 30 can display an excellent design. The mobile body 1 including the decorative molded article 10 exhibits an excellent appearance. The decorative laminate 30 may display a design such as a color or a geometric pattern. The decorative laminate 30 may display a design in a metallic tone or a leather-like texture. The decorative laminate 30 may display a design in a glossy tone or a matt tone. The image clarity of a design displayed by the decorative laminate 30 may be 60 or more, or may be 95 or less. When the decorative laminate 30 displays a design in a smooth and shiny tone such as a metallic tone or a matt tone, the image clarity is measured by using a wave scan device (made by BYK Japan KK, product name: Wave-Scan Dual AW-4840) with a method for measuring "Distinctness of Image (DOI)". As the decorative laminate 30 displays a design with such an image clarity, the mobile body 1, such as an automobile, including the decorative laminate 30 can exhibit a design in a metallic or non-metallic tone coating (also called "solid coating").

Hereafter, decorative laminates 30 according a plurality of examples will be described. Corresponding portions in the examples will be denoted by the same numerals, and descriptions may be omitted if the descriptions are redundant.

Fig. 4 illustrates a cross-sectional view of a decorative laminate 30 according to a first example. In the example illustrated in Fig. 4, the decorative laminate 30 includes the surface layer 33, a base material layer 31, and a design layer 40 in this order from the first surface 30A toward the second surface 30B. Fig. 5 illustrates a cross-sectional view of a decorative laminate 30 according to a second example. In the example illustrated in Fig. 5, the decorative laminate 30 includes the surface layer 33, the design layer 40, and the base material layer 31 in this order from the first surface 30A toward the second surface 30B.

The base material layer 31 supports another layer included in the decorative laminate 30, which is, in particular, the design layer 40. The base material layer 31 has a film-like shape. The base material layer 31 is transparent. The thickness of the base material layer 31 may be 50 µm or more, or may be 75 µm or more. The thickness of the base material layer 31 may be 150 µm or less, or may be 125 µm or less.

The material of the base material layer 31 is, for example, a thermoplastic resin. Examples of the material of the base material layer 31 include a (meth)acrylic resin, a polyolefin (such as polyethylene, polypropylene, or the like), polyester (such as polyethylene naphthalate, polyethylene terephthalate, polybutylene terephthalate, or the like), polyamide, polycarbonate, a cellulose resin, a urethane resin (such as a thermoplastic polyurethane resin or the like), a fluororesin (such as polyvinylidene fluoride (PVDF)), a perfluoro alkoxy alkane (PFA), an ethylene tetra fluoro ethylene copolymer (ETFE), a perfluoro ethylene propylene copolymer (FEP), polytetrafluoroethylene (PTFE), or the like), an ABS resin, a polycarbonate resin, and a cellulose resin. In view of transparency, it is preferable that the material of the base material layer 31 be a (meth)acrylic resin. Examples of the (meth)acrylic resin include a homopolymer or copolymer of a (meth)acrylic ester and a copolymer of (meth)acrylic ester and a comonomer. Examples of the (meth)acrylic ester include methyl (meth)acrylate, ethyl (meth)acrylate, butyl (meth)acrylate, 2-ethyl hexyl (meth)acrylate, hydroxyethyl (meth)acrylate, hydroxypropyl (meth)acrylate, dimethylaminoethyl (meth)acrylate, and glycidyl (meth)acrylate. Examples of the comonomer include vinyl acetate, (meth)acrylonitrile, (meth)acrylamide, styrene, (meth)acrylic acid, itaconic acid, and maleic anhydride. The (meth)acrylic resin may be fluorine-modified. The material of the base material layer 31 may be configured as a single layer in which two or more resins listed above are mixed, or may be composed of a plurality of layers. The base material layer 31 composed of a plurality of layers can be made by, for example, coextrusion.

The base material layer 31 may include a colorant. The color of the colorant included in the base material layer 31 may be a chromatic color, or may be an achromatic color. With the colorant, the base material layer 31 can be colored in a desirable color. The base material layer 31 becomes transparently colored. The color exhibited the base material layer 31 can be similar to the color exhibited a backer layer 37 in a decorative laminate 30 according to a third example (described below). The colorant can have a configuration similar to that of a colorant included in a glossy layer 41 and a coloring layer 43 (described below) of the design layer 40.

In the present description, "transparent" means that a member has a level of transparency with which the other side of the member can be seen through the member from one side of the member, and means that, for example, the member has a visible light transmittance of 30% or more, and more preferably 70% or more. In the present description, "transparently colored" means that a member has a high transmittance and is transparent for visible light as a whole although the transmittance of light in a specific wavelength range is intentionally lowered.

In the present description, visible light transmittance is specified as the average value of total light transmittances measured across wavelengths at 1 nm intervals in the range of 380 nm or more and 780 nm or less by using a spectrophotometer ("UV-3600i Plus" made by Shimadzu Corporation, compliant with JIS K0115). The incident angle when the visible light transmittance is measured is 0° if the transmitting direction is not particularly determined. The incident angle is an angle between the travelling direction of incident light and the direction normal to an incident surface, and has a value less than 90°.

The surface layer 33 protects another layer of the decorative laminate 30. The surface layer 33 has various functions such as wear resistance, weather resistance, and chemical resistance. The surface layer 33 has, for example, wear resistance, weather resistance, chemical resistance, and extensibility required for molding, which are required for an exterior component of an automobile or the like. The surface layer 33 is disposed nearer to the first surface 30A than the second surface 30B with respect to the base material layer 31. The surface layer 33 forms the first surface 30A of the decorative laminate 30. The surface layer 33 forms a surface of the decorative molded article 10. The surface layer 33 has a thin film-like shape. The surface layer 33 is transparent. The thickness of the surface layer 33 may be 1 µm or more, or may be 2 µm or more. The thickness of the surface layer 33 may be 20 µm or less, or may be 10 µm or less. The material of the surface layer 33 is a cured product of a curable resin composition. To be more specific, the material of the surface layer 33 is a cured product of an ionizing-radiation curable resin composition. In the decorative laminate 30 according to each example, the surface layer 33 may have any appropriate configuration.

Examples of a curable component included in the curable resin composition include a thermosetting component and an active-energy-ray curable component. In view of weather resistance, wear resistance, and chemical resistance, an active-energy-ray curable component is preferable.

Examples of the thermosetting component include thermosetting resins such as an epoxy resin, a melamine resin, a guanamine resin, a urea resin, unsaturated polyester, a thermosetting urethane resin, a thermosetting (meth)acrylic resin, and an amino alkyd resin.

The active-energy-ray curable component is a component that cures when irradiated with active energy rays. Examples of the active energy rays include ultraviolet (UV) rays, electromagnetic radiation such as X rays or y rays, an electron beam (EB), and charged particle radiation such as α rays, an ion beam, or the like.

Examples of the active-energy-ray curable component include a compound having at least one functional group selected from vinyl group, allyl group, and (meth)acryloyl group. Examples of the active-energy-ray curable component include: oligomers or polymers of urethane (meth)acrylate, epoxy (meth)acrylate, polyester (meth)acrylate, polyether (meth)acrylate, or the like; polyfunctional (meth)acrylate monomers of trimethylolpropane tri(meth)acrylate, pentaerythritol tri(meth)acrylate, pentaerythritol tetra(meth)acrylate, dipentaerythritol tri(meth)acrylate, dipentaerythritol tetra(meth)acrylate, dipentaerythritol penta(meth)acrylate, dipentaerythritol hexa(meth)acrylate, or tris(2-(meth)acryloyloxyethyl) isocyanurate; and modifications of these. The active-energy-ray curable component may be a mono(meth)acrylate having one (meth)acryloyl group in the molecule thereof.

The curable resin composition may include a photopolymerization initiator, in addition to the active-energy-ray curable component.

The surface layer 33 may include a weather resistance improver. The weather resistance improver can improve the weather resistance of the surface layer. Examples of the weather resistance improver include an ultraviolet ray absorber, an antioxidant, and a hindered amine light stabilizer. The proportion of the weather resistance improver in the surface layer 33 may be 0.1 mass% or more. The proportion of the weather resistance improver in the surface layer 33 may be 10 mass% or less, or may be 5 mass% or less.

When the decorative film 20 includes the protective film 23, the surface layer 33 is protected by the protective film 23. In a state in which the surface layer 33 is protected by the protective film 23, a curable resin composition that is the material of the surface layer 33 need not be cured, or may be in a partially cured state. The protective film 23 may be peeled from the surface layer 33 before the curable resin composition is cured, or the protective film 23 may be peeled from the surface layer 33 after the curable resin composition has been cured.

The design layer 40 forms a design displayed by the decorative laminate 30. The design layer 40 is supported by the base material layer 31. The design layer 40 includes at least one of the glossy layer 41 and the coloring layer 43. The design layer 40 can include the glossy layer 41, a second glossy layer 42, the coloring layer 43, and a transparent layer 45.

Hereafter, design layers 40 according to a plurality of examples will be described. Corresponding portions in the examples will be denoted by the same numerals, and descriptions may be omitted if the descriptions are redundant.

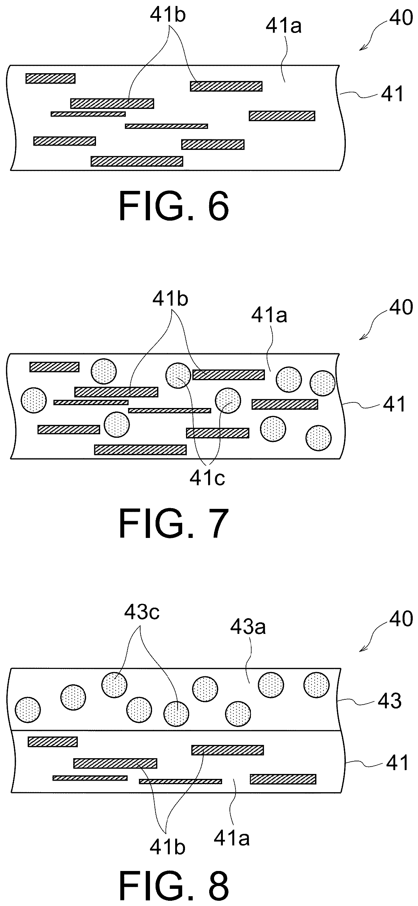

Fig. 6 illustrates a cross-sectional view of a design layer 40 according to a first example. In the example illustrated in Fig. 6, the design layer 40 includes the glossy layer 41. In the illustrated example, the design layer 40 is composed of only the glossy layer 41.

The glossy layer 41 reflects light in such a way as to exhibit gloss. In the L*a*b* color space, the value of SCE L* of the color exhibited by the glossy layer 41 may be 10 or more, may be 25 or more, may be 35 or more, may be 60 or less, may be 50 or less, or may be 48 or less. The value of SCI L* of the color exhibited by the glossy layer 41 may be 20 or more, may be 30 or more, may be 40 or more, may be 90 or less, may be 80 or less, or may be 65 or less.

The value of SCE L* and SCI L* of the color exhibited by the glossy layer 41 in the L*a*b* color space can be measured as follows by using a spectrophotometer ("CM-700d" made by Konica Minolta) under the conditions such that the measured diameter is Φ8mm and the viewing angle is 10 degrees. A black plate whose value of L* is 29.9 is placed on a back surface of a measured member. A surface opposite to the surface on which the black plate is placed is irradiated with light from a D65 light source. The value of SCE L* of the measured member is specified by excluding a specular component from reflected light of total reflection in the member. The value of SCI L* of the measured member is specified from reflection light of total reflection in the measured member.

The glossy layer 41 includes a binder resin 41a and a glossy material 41b. The glossy material 41b is contained in the binder resin 41a. The content of the glossy material 41b in the glossy layer 41 may be 3 mass% or more, or may be 75 mass% or less. The visible light transmittance of the glossy layer 41 may be 0.5% or more, or may be 1% or more. The visible light transmittance of the glossy layer 41 may be 95% or less, or may be 90% or less. The thickness of the glossy layer 41 may be 2 µm or more, may be 3 µm or more, or may be 100 µm or less.

Examples of the binder resin 41a include resins such as a urethane resin, an acrylic polyol resin, an acrylic resin, an ester resin, an amide resin, a butyral resin, a styrene resin, a urethane-acrylic copolymer, a vinyl chloride-vinyl acetate copolymer resin, a vinyl chloride-vinyl acetate-acrylic copolymer resin, a chlorinated propylene resin, a nitrocellulose resin, and an acetylcellulose resin.

The glossy material 41b reflects light. Examples of the glossy material 41b include an aluminum flake, mica, and a pearl pigment. The glossy material 41b is oriented, for example, in a direction along a surface on which the glossy layer 41 is formed. The average particle diameter of the glossy material 41b is in a range such that light is appropriately reflected by the glossy layer 41. If the average particle diameter of the glossy material 41b is too small, light is not sufficiently reflected by the glossy layer 41. If the average particle diameter of the glossy material 41b is too large, the glossy material 41b cannot be oriented along the surface on which the glossy layer 41 is formed, light is diffusely reflected by the glossy layer 41, and it is difficult for the glossy layer 41 to exhibit gloss. The thickness the glossy material 41b may be 20 nm or more. The thickness of the glossy material 41b may be 1 µm or less, may be 700 nm or less, may be 500 nm or less, or may be 300 nm or less. The average particle diameter of the glossy material 41b may be 5 µm or more, may be 10 µm or more, may be 25 µm or less, or may be 15 µm or less.

The average particle diameter of the glossy material 41b is specified as follows. Each glossy material 41b is observed by magnifying the glossy layer 41 with a microscope. The particle diameter of each glossy material 41b is measured from the observed glossy material 41b. When the glossy material 41b has a minor-axis diameter and a major-axis diameter, the particle diameter of the glossy material 41b is defined as the average of these. When the glossy material 41b is clustered, the particle diameter of the glossy material 41b is defined as the diameter of the inscribed circle of the clustered portion. The particle diameters of one hundred glossy materials 41b are measured, and the average particle diameter of the glossy material 41b in the glossy layer 41 is defined as the average of these.

For example, if the decorative laminate 30 extends when molded, the planar arrangement of the glossy material 41b in the glossy layer 41 may change before and after extension. In consideration of this, in a sectional view, the glossy materials 41b in the glossy layer 41 may be disposed in such a way as to overlap each other in the laminating direction thereof. To be specific, a certain glossy material 41b in the glossy layer 41 may be disposed in such a way as to at least partially overlap another glossy material 41b that is positioned above or below the glossy material 41b in the laminating direction. The glossy materials 41b in the glossy layer 41 may overlap one or more other glossy materials 41b in the laminating direction, may overlap two or more other glossy materials 41b in the laminating direction, or may overlap three or more other glossy materials 41b in the laminating direction.

Fig. 7 illustrates a cross-sectional view of a design layer 40 according to a second example. In the example illustrated in Fig. 7, the design layer 40 includes the glossy layer 41. In the illustrated example, the design layer 40 is composed of only the glossy layer 41. The glossy layer 41 reflects light in such a way as to exhibit gloss, and displays a color. The glossy layer 41 includes the binder resin 41a, the glossy material 41b, and a colorant 41c. The glossy material 41b and the colorant 41c are contained in the binder resin 41a.

The colorant 41c colors the glossy layer 41 in a desirable color. The color of the colorant 41c may be a chromatic color, or may be an achromatic color. The colorant 41c is a dye or a pigment. The colorant 41c may be a combination of a dye and a pigment. The colorant 41c is a material different from the glossy material 41b. For example, an aluminum flake, mica, and a pearl pigment are not used as the colorant 41c. In consideration of weather resistance and the like, it is preferable that the colorant 41c be a pigment. The pigment may be a coloring pigment or a fluorescent pigment. Examples of the coloring pigment include: organic pigments such as a quinacridone pigment such as quinacridone red, an azo pigment such as pigment red, a phthalocyanine pigment such as phthalocyanine blue or phthalocyanine green, and a perylene pigment such as perylene red; and inorganic pigments such as titanium oxide and carbon black. If the average particle diameter of the colorant 41c is too large, the colorant 41c can hinder reflection of light by the glossy material 41b. If the average particle diameter of the colorant 41c is too small, the colorant 41c clusters excessively. The average particle diameter of the colorant 41c may be 5 nm or more, or may be 1500 nm or less. The average particle diameter of the colorant 41c can be specified by using a method similar to that for specifying the average particle diameter of the glossy material 41b.

Fig. 8 illustrates a cross-sectional view of a design layer 40 according to a third example. In the example illustrated in Fig. 8, the design layer 40 includes the glossy layer 41 and the coloring layer 43. In the design layer 40, the glossy layer 41 may be disposed nearer to the first surface 30A of the decorative laminate 30 than the coloring layer 43, or the coloring layer 43 may be disposed nearer to the first surface 30A of the decorative laminate 30 than the glossy layer 41. As with the glossy layer 41 in the design layer 40 according to the first example, the glossy layer 41 reflects light in such a way as to exhibit gloss. The glossy layer 41 includes the binder resin 41a and the glossy material 41b.

The coloring layer 43 displays a color. The coloring layer 43 includes a binder resin 43a and a colorant 43c. The colorant 43c is contained in the binder resin 43a. The binder resin 43a of the coloring layer 43 can have a configuration similar to that of the binder resin 41a of the glossy layer 41 in the design layer 40 according to the first example. The color of the colorant 43c may be a chromatic color, or may be an achromatic color. The colorant 43c of the coloring layer 43 can have a configuration similar to that of the colorant 41c of the glossy layer 41 in the design layer 40 according to the second example. The visible light transmittance of the coloring layer 43 may be 5% or more, or may be 90% or less. The thickness of the coloring layer 43 may be 2 µm or more, or may be 50 µm or less.

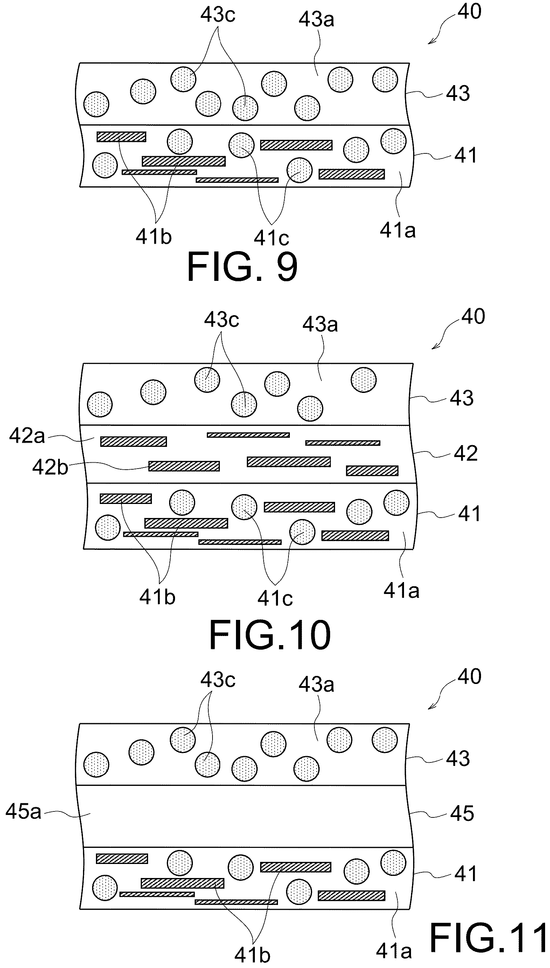

Fig. 9 illustrates a cross-sectional view of a design layer 40 according to a fourth example. In the example illustrated in Fig. 9, the design layer 40 includes the glossy layer 41 and the coloring layer 43. In the design layer 40, the glossy layer 41 may be disposed nearer to the first surface 30A of the decorative laminate 30 than the coloring layer 43, or the coloring layer 43 may be disposed nearer to the first surface 30A of the decorative laminate 30 than the glossy layer 41. As with the glossy layer 41 in the design layer 40 according to the second example, the glossy layer 41 reflects light in such a way as to exhibit gloss, and displays a color. The glossy layer 41 includes the binder resin 41a, the glossy material 41b, and the colorant 41c. The coloring layer 43 displays a color as with the coloring layer 43 in the design layer 40 according to the third example. The coloring layer 43 includes the binder resin 43a and the colorant 43c.

Fig. 10 illustrates a cross-sectional view of a design layer 40 according to a fifth example. In the example illustrated in Fig. 10, the design layer 40 includes the glossy layer 41, the second glossy layer 42, and the coloring layer 43. The second glossy layer 42 is superposed on the glossy layer 41. In the design layer 40, the second glossy layer 42 is disposed nearer to the first surface 30A than the second surface 30B of the decorative laminate 30 with respect to the glossy layer 41. In the design layer 40, the coloring layer 43, the second glossy layer 42, and the glossy layer 41 are arranged in this order from the first surface 30A toward the second surface 30B. The order of the coloring layer 43, the second glossy layer 42, and the glossy layer 41 in the design layer 40 is not limited to the illustrated example. In the design layer 40, the second glossy layer 42, the coloring layer 43, and the glossy layer 41 may be disposed in this order from the first surface 30A toward the second surface 30B. As with the glossy layer 41 in the design layer 40 according to the first example, the glossy layer 41 reflects light in such a way as to exhibit gloss. The glossy layer 41 includes the binder resin 41a and the glossy material 41b. As with the coloring layer 43 in the design layer 40 according to the third example, the coloring layer 43 displays a color. The coloring layer 43 includes the binder resin 43a and the colorant 43c.

The second glossy layer 42 can have a configuration similar to that of the glossy layer 41. The second glossy layer 42 reflects light in such a way as to exhibit gloss. The second glossy layer 42 includes a binder resin 42a and a glossy material 42b. The glossy material 42b is contained in the binder resin 42a. The binder resin 42a of the second glossy layer 42 can have a configuration similar to that of the binder resin 41a of the glossy layer 41 in the design layer 40 according to the first example. The glossy material 42b of the second glossy layer 42 can have a configuration similar to that of the glossy material 41b of the glossy layer 41 in the design layer 40 according to the first example. The content of the glossy material 41b in the glossy layer 41 is different from the content of the glossy material 42b in the second glossy layer 42. In this example, the content of the glossy material 41b in the glossy layer 41 is higher than the content of the glossy material 42b in the second glossy layer 42. The "content of a glossy material" means the proportion of the area occupied by the glossy material per unit area in a cross section of a layer including the glossy material. The second glossy layer 42 may display a color. The second glossy layer 42 may include a colorant. The colorant included in the second glossy layer 42 can have a configuration similar to that of the colorant 41c of the glossy layer 41 in the design layer 40 according to the second example. The content of the colorant in the second glossy layer 42 may be the same as or may be different from the content of the colorant 41c in the glossy layer 41. The content of the colorant in the second glossy layer 42 may be lower than or may be higher than the content of the colorant 41c in the glossy layer 41.

When layers including a glossy material, such as the glossy layer 41 and the second glossy layer 42, are laminated, the content of the glossy material in a lower layer may be lower than, the same as, or higher than the content of the glossy material in an upper layer. The content of the glossy material in an upper layer may be 5% or more or may be 1000% or less of the content of the glossy material in a lower layer. The ratio of the content of the glossy material in an upper layer to the content of the glossy material in a lower layer is set so that change in light reflectance in the layers that are laminated and that include the glossy material is small when the decorative laminate 30 is molded and extends. When each of the layers including a glossy material includes a colorant, the content of the colorant in a lower layer may be lower than, the same as, or higher than the content of the colorant in an upper layer. The term "upper layer" refers to a layer, among the laminated layers, that is near the first surface 30A of the decorative laminate 30. The term "lower layer" refers to a layer, among the laminated layers, that is near the second surface 30B of the decorative laminate 30. The content of a glossy material in a layer that is laminated and that includes the glossy material is compared by using the proportion of the area occupied by the glossy material per unit area in a cross section of the layer.

In the glossy layer 41 according to each example, the content of the glossy material on a side near the second surface 30B may be lower than, the same as, or higher than the content of the glossy material on a side near the first surface 30A. When the glossy layer 41 according to each example includes a colorant, the content of the colorant on a side near the second surface 30B may be lower than, the same as, or higher than the content of the colorant on a side near the first surface 30A.

The glossy layer 41 may overlap the second glossy layer 42 in such a way as to be in direct contact with each other. In this case, the glossy layer 41 and the second glossy layer 42 can be easily in close contact with each other via binder resins thereof.

Fig. 11 illustrates a cross-sectional view of a design layer 40 according to a sixth example. In the example illustrated in Fig. 11, the design layer 40 includes the glossy layer 41, the coloring layer 43, and the transparent layer 45. The transparent layer 45 is disposed between the glossy layer 41 and the coloring layer 43. As with the glossy layer 41 in the design layer 40 according to the first example, the glossy layer 41 reflects light in such a way as to exhibit gloss. The glossy layer 41 includes the binder resin 41a and the glossy material 41b. As with the coloring layer 43 in the design layer 40 according to the third example, the coloring layer 43 displays a color. The coloring layer 43 includes the binder resin 43a and the colorant 43c.

The transparent layer 45 separates the glossy layer 41 and the coloring layer 43 from each other. The transparent layer 45 includes a binder resin 45a. The binder resin 45a of the transparent layer 45 can have a configuration similar to that of the binder resin 41a of the glossy layer 41 in the design layer 40 according to the first example. The transparent layer 45 has a thickness corresponding to the distance between the glossy layer 41 and the coloring layer 43. The thickness of the transparent layer 45 may be 10 µm or more, or may be 25 µm or more. The thickness of the transparent layer 45 may be 300 µm or less, or may be 200 µm or less.

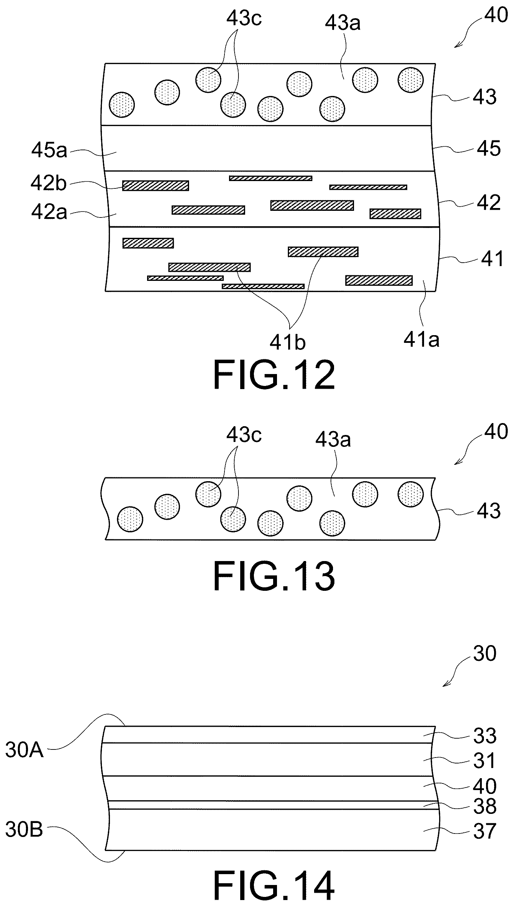

Fig. 12 illustrates a cross-sectional view of a design layer 40 according to a seventh example. In the example illustrated in Fig. 12, the design layer 40 includes the glossy layer 41, the second glossy layer 42, the coloring layer 43, and the transparent layer 45. The second glossy layer 42 is superposed on the glossy layer 41. In the design layer 40, the second glossy layer 42 is disposed nearer to the first surface 30A than the second surface 30B of the decorative laminate 30 with respect to the glossy layer 41. In the design layer 40, the coloring layer 43, the transparent layer 45, the second glossy layer 42, and the glossy layer 41 are arranged in this order from the first surface 30A toward the second surface 30B. The order of the coloring layer 43, the transparent layer 45, the second glossy layer 42, and the glossy layer 41 in the design layer 40 is not limited to the illustrated example. In the design layer 40, the second glossy layer 42, the transparent layer 45, the coloring layer 43, and the glossy layer 41 may be disposed in this order from the first surface 30A toward the second surface 30B. As with the glossy layer 41 in the design layer 40 according to the first example, the glossy layer 41 reflects light in such a way as to exhibit gloss. The glossy layer 41 includes the binder resin 41a and the glossy material 41b. As with the second glossy layer 42 in the design layer 40 according to the fifth example, the second glossy layer 42 reflects light in such a way as to exhibit gloss. The second glossy layer 42 includes the binder resin 42a and the glossy material 42b. As with the coloring layer 43 in the design layer 40 according to the third example, the coloring layer 43 displays a color. The coloring layer 43 includes the binder resin 43a and the colorant 43c. As with the transparent layer 45 in the design layer 40 according to the sixth example, the transparent layer 45 separates the glossy layer 41 and the coloring layer 43 from each other. The transparent layer 45 includes the binder resin 45a.

Fig. 13 illustrates a cross-sectional view of a design layer 40 according to an eighth example. In the example illustrated in Fig. 13, the design layer 40 includes the coloring layer 43. In the illustrated example, the design layer 40 is composed of only the coloring layer 43. As with the coloring layer 43 in the design layer 40 according to the third example, the coloring layer 43 displays a color. The coloring layer 43 includes the binder resin 43a and the colorant 43c. The design layer 40 according to the eighth example forms, for example, a design of piano black color.

The design layer 40 is not limited to the examples described above. The design layer 40 may be, for example, a combination of the design layers 40 according to the examples described above. The design layer 40 may include another layer for forming a design. For example, the design layer 40 may further include a third glossy layer including a glossy material contained in a binder resin.

Fig. 14 illustrates a cross-sectional view of a decorative laminate 30 according to a third example. In the example illustrated in Fig. 14, the decorative laminate 30 includes the surface layer 33, the base material layer 31, the design layer 40, a bonding layer 38, and the backer layer 37 in this order from the first surface 30A toward the second surface 30B. The illustrated example is not a limitation, and the backer layer 37 and/or the bonding layer 38 may be omitted.

The backer layer 37 maintains the shape of the decorative laminate 30 when the decorative film 20 having the decorative laminate 30 is molded. The backer layer 37 is disposed nearer to the second surface 30B than the first surface 30A with respect to the design layer 40. In the illustrated example, the backer layer 37 forms the second surface 30B of the decorative laminate 30. As with a cushioning layer 39 (described below), when the decorative laminate 30 receives an impact from the outside due to stone chippings or the like, the backer layer 37 may alleviate an impact on another layer of the decorative laminate 30 and the molded portion 11. The backer layer 37 has a sheet-like shape. The thickness of the backer layer 37 may be 50 µm or more, or may be 500 µm or less. The material of the backer layer 37 is, for example, a thermoplastic resin. To be specific, examples of the material the backer layer 37 include an acrylonitrile-butadiene-styrene copolymer, polypropylene, polycarbonate, polymethyl methacrylate, and polyvinyl chloride.

The backer layer 37 may be colored. The backer layer 37 may include a colorant. The color of the colorant included in the backer layer 37 may be a chromatic color, or may be an achromatic color. With the colorant, the backer layer 37 can be colored in a desirable color. It is preferable to set the color exhibited by the backer layer 37 in accordance with the color exhibited by the design layer 40. The colorant included in the backer layer 37 can have a configuration similar to that of the colorant included in the glossy layer 41 and the coloring layer 43 of the design layer 40 described above.

The color exhibited by the backer layer 37 may be a color of the same hue as the color exhibited by the design layer 40. The color exhibited by the backer layer 37 may be a color similar to the color exhibited by the design layer 40. The term "color of the same hue" refers to a color having the same hue, including a color that differs in lightness or saturation. The term "color similar to" refers to a color within 30 degrees of central angle in a continuous color wheel, including a color that differs in lightness or saturation. For example, when the color exhibited by the design layer 40 is red, it is possible to use the backer layer 37 that is brown.

In the L*a*b* color space, the difference between the value L*₁ of L* of the color exhibited by the backer layer 37 and the value L*₂ of L* of the color exhibited by the design layer 40 may be 10 or less, may be 8 or less, may be 6 or less, or may be 4 or less. In the L*a*b* color space, regarding the value a*₁ of a* and the value b*₁ of b* of the color exhibited by the backer layer 37 and the value a*₂ of a* and the value b*₂ of b* of the color exhibited by the design layer 40, the value of ((a*₁ - a*₂)² + (b*₁ - b*₂)²)^{1/2} may be 20 or less, may be 17 or less, may be 15 or less, may be 13 or less, or may be 11 or less. The value of L*, the value of a*, and the value of b* of the color exhibited by the backer layer 37 and the color exhibited by the design layer 40 in the L*a*b* color space can be measured as follows by using a spectrophotometer ("CM-700d" made by Konica Minolta) under the conditions such that the measured diameter is Φ8mm and the viewing angle is 10 degrees. A black plate whose value of L* is 29.9 is placed on a back surface of a measured member. A surface opposite to the surface on which the black plate is placed is irradiated with light from a D65 light source. The values of L*, a*, and b* of the measured member are specified from reflected light of total reflection in the measured member.

The bonding layer 38 bonds the backer layer 37 to another layer of the decorative laminate 30. In the illustrated example, the bonding layer 38 bonds the backer layer 37 to the design layer 40. The bonding layer 38 is disposed between the backer layer 37 and the design layer 40. As with the cushioning layer 39 (described below), when the decorative laminate 30 receives an impact from the outside due to stone chippings or the like, the bonding layer 38 may alleviate an impact on another layer of the decorative laminate 30 and the molded portion 11. The bonding layer 38 has a thin film-like shape. The thickness of the bonding layer 38 may be 1 µm or more, or may be 20 µm or less. The visible light transmittance of the bonding layer 38 may be 0% or more, may be 50% or more, may be 100% or less, or may be 20% or less. Examples of the material of the bonding layer 38 include: thermoplastic resins such as an acrylic resin, a vinyl chloride - vinyl acetate copolymer, a chlorinated polyolefin resin, and an acid modified polyolefin resin; and curable resins such as a urethane resin of two-component curable type or the like and an epoxy resin.

The bonding layer 38 may be colored. The bonding layer 38 may include a colorant. The color of the colorant included in the bonding layer 38 may be a chromatic color, or may be an achromatic color. With the colorant, the bonding layer 38 can be colored in a desirable color. It is preferable to set the color exhibited by the bonding layer 38 in accordance with the color exhibited by the design layer 40. Setting of the color can be similar to that of the color exhibited by the backer layer 37 in the decorative laminate 30 according to the third example described above. The colorant included in the bonding layer 38 can have a configuration similar to that of the colorant included in the glossy layer 41 and the coloring layer 43 of the design layer 40 described above.

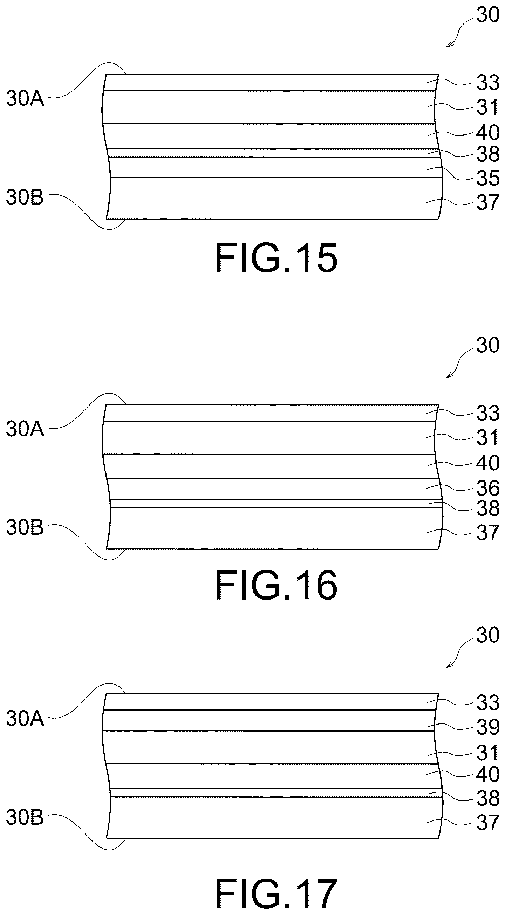

Fig. 15 illustrates a cross-sectional view of a decorative laminate 30 according to a fourth example. In the example illustrated in Fig. 15, the decorative laminate 30 includes the surface layer 33, the base material layer 31, the design layer 40, the bonding layer 38, a concealing layer 35, and the backer layer 37 in this order from the first surface 30A toward the second surface 30B. The backer layer 37 and/or the bonding layer 38 may be omitted.

The concealing layer 35 conceals another member, such as the molded portion 11, provided on the second surface 30B of the decorative laminate 30 so that the other member becomes less likely to be observed from the first surface 30A of the decorative laminate 30. The concealing layer 35 is disposed nearer to the second surface 30B than the first surface 30A with respect to the design layer 40. In the illustrated example, the concealing layer 35 is disposed between the bonding layer 38 and the backer layer 37. The illustrated example is not a limitation, and the concealing layer 35 may be disposed between the design layer 40 and the bonding layer 38. The concealing layer 35 has a thin film-like shape. The thickness of the concealing layer 35 may be 2 µm or more, may be 10 µm or more, may be 100 µm or less, or may be 20 µm or less. The visible light transmittance of the concealing layer 35 is sufficiently low. To be specific, the visible light transmittance of the concealing layer 35 may be 20% or less.

The concealing layer 35 includes a colorant. The color of the colorant included in the concealing layer 35 may be a chromatic color, or may be an achromatic color. With the colorant, the concealing layer 35 is colored in a desirable color. It is preferable to set the color exhibited the concealing layer 35 in accordance with the color exhibited by the design layer 40. Setting of the color can be similar to that of the color exhibited by the backer layer 37 in the decorative laminate 30 according to the third example described above. The colorant included in the concealing layer 35 can have a configuration similar to that of the colorant included in the glossy layer 41 and the coloring layer 43 of the design layer 40 described above.

Fig. 16 illustrates a cross-sectional view of a decorative laminate 30 according to a fifth example. In the example illustrated in Fig. 16, the decorative laminate 30 includes the surface layer 33, the base material layer 31, the design layer 40, a reflective layer 36, the bonding layer 38, and the backer layer 37 in this order from the first surface 30A toward the second surface 30B. The backer layer 37 and/or the bonding layer 38 may be omitted.

The reflective layer 36 reflects light so that another member, such as the molded portion 11, provided on the second surface 30B of the decorative laminate 30 is not observed from the first surface 30A of the decorative laminate 30 and so that the design formed by the design layer 40 can be more clearly observed. The reflective layer 36 reflects light that has passed through the glossy layer 41 of the design layer 40 without being reflected by the glossy layer 41. The reflective layer 36 is disposed nearer to the second surface 30B than the first surface 30A with respect to the design layer 40. In the illustrated example, the reflective layer 36 is disposed between the design layer 40 and the bonding layer 38. The illustrated example is not a limitation, and the reflective layer 36 may be disposed between the bonding layer 38 and the backer layer 37. The reflective layer 36 has a thin film-like shape. The thickness of the reflective layer 36 may be 30 nm or more, may be 2 µm or more, may be 20 µm or less, or may be 100 nm or less. The visible light transmittance of the reflective layer 36 may be 0% or more, or may be 20% or less. Examples of the material of the reflective layer 36 include: a vapor-deposited film of aluminum, indium, or tin; and an achromatic or silver ink.

Fig. 17 illustrates a cross-sectional view of a decorative laminate 30 according to a sixth example. In the example illustrated in Fig. 17, the decorative laminate 30 includes the surface layer 33, the cushioning layer 39, the base material layer 31, the design layer 40, the bonding layer 38, and the backer layer 37 in this order from the first surface 30A toward the second surface 30B. The backer layer 37 and/or the bonding layer 38 may be omitted.

When the decorative laminate 30 receives an impact from the outside due to stone chippings or the like, the cushioning layer 39 alleviates an impact on another layer of the decorative laminate 30 and on the molded portion 11. The cushioning layer 39 is, for example, a layer that includes a plasticizer and that has chipping resistance. Examples of the plasticizer include a phthalate plasticizer, a fatty acid plasticizer, a phosphate plasticizer, a polyester plasticizer, a polyethylene plasticizer, and an epoxy plasticizer. Examples of the phthalate plasticizer include diester phthalates such as dioctyl phthalate, di-2-ethylhexyl phthalate, dihexyl phthalate, dibutyl phthalate, diheptyl phthalate, diisodecyl phthalate, and diisononyl phthalate. Examples of the fatty acid plasticizer include: aliphatic polybasic diesters such as dioctyl adipate, dioctyl azelate, and dioctyl sebacate; and citric acid triesters such as tributyl acetylcitrate, trioctyl acetylcitrate, and tributyl citrate. The cushioning layer 39 is, for example, a layer that includes elastomer and has chipping resistance. Examples of the elastomer include a styrene elastomer, a polyester elastomer, a urethane elastomer, an olefin elastomer, and a polyamide elastomer.

The cushioning layer 39 is disposed nearer to the second surface 30B than the first surface 30A with respect to the surface layer 33. In the illustrated example, the cushioning layer 39 is disposed between the surface layer 33 and the base material layer 31. The illustrated example is not a limitation, and the cushioning layer 39 may be disposed between the base material layer 31 and the design layer 40, may be disposed between the design layer 40 and the bonding layer 38, or may be disposed between the bonding layer 38 and the backer layer 37. The backer layer 37 may have the function of the cushioning layer 39. In other words, the backer layer 37 and the cushioning layer 39 may be the same layer. The cushioning layer 39 has a thin film-like shape. The thickness of the cushioning layer 39 may be 10 µm or more, or may be 500 µm or less. The cushioning layer 39 may include a plurality of layers. Examples of the material of the cushioning layer 39 include a resin containing a polyester plasticizer such as adipic acid polyester or phthalate polyester, a vinyl chloride-vinyl acetate copolymer, a polyurethane resin, a polyester resin, an epoxy resin, an acrylic resin, and a polyolefin resin. The amount of plasticizer included in the cushioning layer 39 may be 1 part by mass or more, or may be less than 40 parts by mass.

A design displayed by the decorative laminate 30 including the cushioning layer 39 is not easily damaged. It is possible to visually check that a displayed design is hardly damaged even when a stone-chipping test is performed on the decorative laminate 30 including the cushioning layer 39. It is possible to suppress peeling and breakage of a layer included in the decorative film 20 as the cushioning layer 39 alleviates an impact even when a stone-chipping test is performed on the decorative laminate 30 including the cushioning layer 39. It is possible to suppress peeling of the decorative film 20 including the decorative laminate 30 from the molded portion 11 as the cushioning layer 39 alleviates an impact even when a stone-chipping test is performed on the decorative laminate 30 including the cushioning layer 39. The stone-chipping test is performed under the following conditions by using a gravel test instrument JA400 (made by Suga Test Instruments).

### <Test Conditions>

Shot Material: Crushed Stone No. 7 stipulated in JIS A5001 (Crushed Stone for Road Construction)
Amount of Shot Material: 50 g
Distance: 35 cm
Shot Pressure: 0.39 MPa
Shot Angle: 90°
Test Temperature: -20°C

When the cushioning layer 39 is disposed nearer to the second surface 30B of the decorative laminate 30 than the design layer 40, the cushioning layer 39 may include a colorant. The color exhibited by the cushioning layer 39 may be a color of the same hue as or may be a color similar to the color exhibited by the design layer 40.

The decorative laminate 30 is not limited to the examples described above. The decorative laminate 30 may be, for example, a combination of the decorative laminates 30 according to the examples described above. For example, the decorative laminate 30 may include the surface layer 33, the design layer 40, the base material layer 31, the cushioning layer 39, the concealing layer 35, the reflective layer 36, the bonding layer 38 that is colored, and the backer layer 37 that is colored in this order from the first surface 30A toward the second surface 30B. When the decorative laminate 30 includes the concealing layer 35 and the reflective layer 36, the reflective layer 36 is disposed nearer to the second surface 30B than the first surface 30A with respect to the concealing layer 35. The decorative laminate 30 may include another layer having a desirable function. For example, the decorative laminate 30 may include the surface layer 33, the design layer 40, the base material layer 31, the cushioning layer 39, the reflective layer 36, the concealing layer 35, the bonding layer 38 that is colored, and the backer layer 37 that is colored in this order from the first surface 30A toward the second surface 30B.

In the decorative laminate 30, a layer that can alleviate an impact on another layer of the decorative laminate 30 and the molded portion 11 when receiving an impact from the outside due to stone chippings or the like is sufficiently thick so that the layer can sufficiently alleviate the impact from the outside. In the decorative laminate 30, the ratio of the sum of the thicknesses of the bonding layer 38, the backer layer 37, and the cushioning layer 39 to the sum of the thicknesses of the surface layer 33, the base material layer 31, and the design layer 40 may be 0.14 or more, or may be 19 or less. If the cushioning layer 39 is omitted in the decorative laminate 30, the ratio of the sum of the thicknesses of the bonding layer 38 and the backer layer 37 to the sum of the thicknesses of the surface layer 33, the base material layer 31, and the design layer 40 may be 0.12 or more, or may be 9.6 or less. If the backer layer 37 is omitted in the decorative laminate 30, the ratio of the sum of the thicknesses of the bonding layer 38 and the cushioning layer 39 to the sum of the thicknesses of the surface layer 33, the base material layer 31, and the design layer 40 may be 0.020 or more, or may be 9.6 or less.

The thickness of the decorative laminate 30 may be 60 µm or more, may be 100 µm or more, may be 1 mm or less, or may be 500 µm or less. As the thickness of the decorative laminate 30 is sufficiently thin, it is possible to roll the decorative laminate 30 into a roll shape. It is possible to easily handle the decorative laminate 30. As the thickness of the decorative laminate 30 is sufficiently thin, the time needed to heat the decorative laminate 30 to a moldable temperature is shortened when molding the decorative laminate 30. It becomes easier to produce the decorative molded article 10. As the thickness of the decorative laminate 30 is sufficiently thin, the cost of the decorative laminate 30 itself can be reduced. As the decorative laminate 30 is sufficiently thick, the decorative laminate 30 can maintain an appropriate shape even when the decorative laminate 30 is molded. As the decorative laminate 30 is sufficiently thick, when the decorative laminate 30 is heated to a moldable temperature to mold the decorative laminate 30, the decorative laminate 30 does not easily break due to heat.

An example of a method for producing each of the decorative laminate 30, the decorative film 20, and the decorative molded article 10 will be described. A method for producing the decorative laminate 30 includes a step of printing or applying the design layer 40 to the base material layer 31, and a step of forming the surface layer 33. A method for producing the decorative film 20 includes a step of providing the joining layer 21 on the decorative laminate 30. A method for producing the decorative molded article 10 includes a step of vacuum molding the decorative film 20 or the decorative laminate 30, and a step of forming the molded portion 11 on the decorative film 20 or the decorative laminate 30.

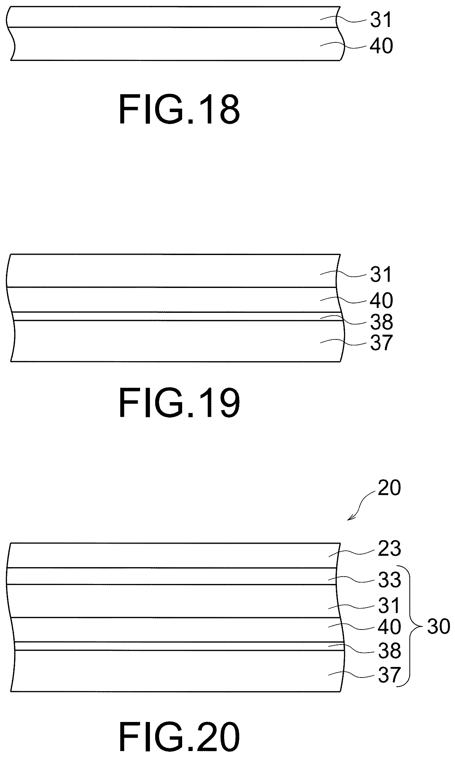

As illustrated in Fig. 18, the design layer 40 is provided on the base material layer 31. Layers to be included in the design layer 40 are sequentially printed on or applied to the base material layer 31. As an example, a process of providing the design layer 40 according to the example illustrated in Fig. 8 on the base material layer 31 by printing will be described. The coloring layer 43, including the binder resin 43a and the colorant 43c, is printed on the base material layer 31. The glossy layer 41, including the binder resin 41a and the glossy material 41b, is printed on the coloring layer 43. The coloring layer 43 and the glossy layer 41 are provided by using any appropriate printing method such as offset printing, inkjet printing, gravure printing, or screen printing. The printing method may be selected as appropriate in accordance with a colorant and a glossy material included in the coloring layer 43 and the glossy layer 41. Because the thickness of the glossy layer 41 to be provided is sufficiently thin and the average particle diameter of the glossy material 41b is sufficiently small, the glossy material 41b included in the glossy layer 41 becomes oriented along the surface on which the glossy layer 41 is formed. By forming the glossy layer 41 by printing, it becomes easy to orient the glossy material 41b in the direction along the main surface.

As another example of providing the design layer 40 on the base material layer 31 illustrated in Fig. 18, a process of providing the design layer 40 according to the example illustrated in Fig. 8 on the base material layer 31 by application will be described. The coloring layer 43, including the binder resin 43a and the colorant 43c, is applied to the base material layer 31. The glossy layer 41, including the binder resin 41a and the glossy material 41b, is applied to the coloring layer 43. The coloring layer 43 and the glossy layer 41 are provided by using any appropriate application method such as air spray application, ultrasonic spray application, electrostatic spray application, or the like. The application method may be selected as appropriate in accordance with a colorant and a glossy material included in the coloring layer 43 and the glossy layer 41. Because the thickness of the glossy layer 41 is sufficiently thin and the average particle diameter of the glossy material 41b is sufficiently small, the glossy material 41b included in the glossy layer 41 becomes oriented along the surface on which the glossy layer 41 is formed. By forming the glossy layer 41 by application, it is possible to make the orientation of the glossy material 41b along the main surface be equivalent to that of coating.

The content of the glossy material 41b in the glossy layer 41 is determined in accordance with the extension ratio by which the decorative laminate 30 extends in a step of vacuum molding the decorative film 20 or the decorative laminate 30. For example, when the decorative laminate 30 extends by 100% in a step of vacuum molding the decorative film 20 or the decorative laminate 30, the content of the glossy material 41b in the glossy layer 41 of the design layer 40 in the decorative laminate 30 before being vacuum molded may be twice or more of the content of the glossy material 41b that the glossy layer 41 should include in the decorative molded article 10. Thus, in a sectional view, the glossy materials 41b in the glossy layer 41 are disposed in such a way as to overlap in the laminating direction.

When the decorative laminate 30 including the concealing layer 35 is to be produced, the concealing layer 35 is printed in such a way as to overlap the design layer 40. The concealing layer 35 is provided by using any appropriate printing method such as offset printing, inkjet printing, gravure printing, or screen printing.

When the decorative laminate 30 including the reflective layer 36 is to be produced, the reflective layer 36 is provided in such a way as to overlap the design layer 40. The reflective layer 36 is provided by vapor-depositing a metal or by printing an achromatic or silvery ink.

When the decorative laminate 30 including the cushioning layer 39 is to be produced, the cushioning layer 39 is provided at a desirable position on the decorative laminate 30. The cushioning layer 39 is provided by using any appropriate printing method such as offset printing, inkjet printing, gravure printing, or screen printing; by heat lamination; or by affixing using an adhesive.

When the decorative laminate 30 including the backer layer 37 and the bonding layer 38 is to be produced, as illustrated in Fig. 19, the backer layer 37 provided with the bonding layer 38 is laminated on the design layer 40. With the bonding layer 38, the backer layer 37 is bonded to the design layer 40.

The surface layer 33 is formed. The surface layer 33 is provided in such a way as to form the first surface 30A of the decorative laminate 30. The surface layer 33 is provided by using any appropriate printing method such as offset printing, inkjet printing, gravure printing, or screen printing. Alternatively, the surface layer 33 is formed, for example, by applying an ionizing-radiation-curable resin composition to a surface of the base material layer 31 opposite to a surface on which the design layer 40 is provided, and by curing the composition by irradiating the composition with ultraviolet rays or an electron beam. Alternatively, the surface layer 33 is formed, for example, by applying a thermosetting resin composition to a surface of the base material layer 31 opposite to a surface on which the design layer 40 is provided, and by curing the composition by heating the composition. The surface layer 33 may be provided on the base material layer 31 before the design layer 40 is printed on or applied to the base material layer 31. When the decorative film 20 includes the protective film 23, a step of curing the composition by irradiating the composition with ultraviolet rays or an electron beam or by heating the composition may be performed after removing the protective film 23.

The surface layer 33 need not be completely cured. The surface layer 33, although being joined to the base material layer 31 or the design layer 40, may be in an expandable and contractable state. Curing of the surface layer 33 can controlled by adjusting the intensity of ultraviolet rays or an electron beam with which the composition to become the surface layer 33 is irradiated or the temperature at which the composition to become the surface layer 33 is heated. As the surface layer 33 is not completely cured, it is possible to suppress scratching of the surface layer 33 before the decorative film 20 including the decorative laminate 30 and the decorative molded article 10 are produced.

Through the process described above, the decorative laminate 30 is produced.

As illustrated in Fig. 20, when the decorative film 20 includes the protective film 23, the protective film 23 is provided on the surface layer 33. The protective film 23 is provided by being affixed to the surface layer 33. The protective film 23 may be provided on the surface layer 33 before the design layer 40 is printed on or applied to the base material layer 31.

The joining layer 21 is provided on the decorative laminate 30. When the joining layer 21 is a heat seal layer, the joining layer 21 is provided by coating the second surface 30B of the decorative laminate 30 with the joining layer 21. When the joining layer 21 is a sticky layer, the joining layer 21 is provided by applying a sticky agent to the second surface 30B of the decorative laminate 30. In any of the cases where the joining layer 21 is a heat seal layer and a sticky layer, the joining layer 21 may be provided on the second surface 30B of the decorative laminate 30 by using any appropriate printing method such as offset printing, inkjet printing, gravure printing, or screen printing.

Through the process described above, the decorative film 20 is produced.

The decorative film 20 and the decorative laminate 30 are vacuum molded. The decorative laminate 30 extends to have a shape along a surface of the decorative molded article 10 to be produced. The decorative laminate 30 that has been vacuum molded displays a desirable design in the decorative molded article 10. The decorative laminate 30 is formed larger than the decorative molded article 10. The decorative laminate 30 that has been vacuum molded is trimmed in such a way as to coincide with the surface shape of the decorative molded article 10.

The molded portion 11 is formed nearer to the second surface 30B than the first surface 30A of the decorative laminate 30. The molded portion 11 may be directly provided on the decorative laminate 30 by injection molding such as insert molding, may be provided by TOM molding, or may be provided by being molded by using another method. When the joining layer 21 is a heat seal layer, the joining layer 21 joins the decorative film 20 to the molded portion 11 by being heated. When the joining layer 21 is a sticky layer, the joining layer 21 joins the decorative film 20 to the molded portion 11 by receiving a pressure.

When the surface layer 33 is not completely cured, after forming the molded portion 11 on the decorative laminate 30, the surface layer 33 may be cured by irradiating the surface layer 33 with ultraviolet rays or an electron beam or by heating the surface layer 33.

When the decorative film 20 includes the protective film 23, the protective film 23 is removed from the surface layer 33. Preferably, the protective film 23 is removed after the decorative laminate 30 has been trimmed, in order to avoid adhesion of shavings, which are generated when the decorative laminate 30 is trimmed, to the surface layer 33. For example, the protective film 23 may be removed after the decorative laminate 30 has been trimmed and before the molded portion 11 is molded on the decorative laminate 30, or may be removed after the molded portion 11 has been molded on the decorative laminate 30. A composition forming the surface layer 33 may be cured after the protective film 23 has been removed.

Through the process described above, the decorative molded article 10 is produced.

It is considered to provide a design to a molded portion of an exterior member or the like of a mobile body by using a decorative film instead of by coating with paint. It is required to make a design displayed by a decorative laminate of the decorative film closer to a design displayed by coating with paint.

In the decorative laminate 30 according to the present embodiment, the design layer 40 includes the glossy layer 41 including the glossy material 41b. The design layer 40 can form a design close to that of coating with paint by reflecting light with the glossy layer 41. It is possible to make a design displayed by the decorative laminate 30 closer to a design displayed by coating with paint. The decorative laminate 30 can display an excellent design. By using the decorative laminate 30, it is possible to reduce emission of volatile organic compounds and carbon dioxide in the production of the decorative molded article 10.

The decorative laminate 30 includes the surface layer 33. The surface layer 33 protects the design layer 40. With the surface layer 33, the decorative molded article 10 including the decorative laminate 30 can have durability that is required when the decorative molded article 10 is used as a part of an exterior member of the mobile body 1.

The thickness of the glossy layer 41 is 100 µm or less. Because the thickness of the glossy layer 41 is sufficiently small, the glossy material 41b can be oriented along a surface on which the glossy layer 41 is formed. The design layer 40 can form a design exhibiting gloss due to the glossy layer 41. The decorative laminate 30 can display a more excellent design.

The glossy layer 41 includes the colorant 41c. Because the glossy layer 41 is colored with the colorant 41c, the glossy layer 41 exhibits a color while reflecting light. The design layer 40 can form a design that exhibits gloss and a color due to the glossy layer 41. The decorative laminate 30 can display a more excellent design.

The design layer 40 includes the coloring layer 43 including the colorant 43c. In the design layer 40, the glossy layer 41 exhibiting gloss and the coloring layer 43 exhibiting a color are different layers. The design layer 40 can form a design with depth. The decorative laminate 30 can display a more excellent design.

The design layer 40 includes the transparent layer 45. The transparent layer 45 is disposed between the coloring layer 43 and the glossy layer 41. Due to the transparent layer 45, the glossy layer 41 exhibiting gloss and the coloring layer 43 exhibiting a color are separated. The design layer 40 can form a design with greater depth. The decorative laminate 30 can display a more excellent design.

The design layer 40 includes the second glossy layer 42. The second glossy layer 42 can reflect light that is not reflected by the glossy layer 41. With the second glossy layer 42, it is possible to adjust the amount of light reflected by the decorative laminate 30 and to make the design displayed by the decorative laminate 30 appropriate. With the second glossy layer 42, the design layer 40 can form a design with greater depth. The decorative laminate 30 can display a more excellent design.

The content of the glossy material 41b in the glossy layer 41 is different from the content of the glossy material 42b in the second glossy layer 42. The design layer 40 can form a more complicated design. The decorative laminate 30 can display a more excellent design.

The content of the glossy material 41b in the glossy layer 41 near the second surface 30B is higher than the content of the glossy material 42b in the second glossy layer 42 near the first surface 30A. Even when the second glossy layer 42 becomes less unlikely to reflect light when the decorative laminate 30 is vacuum molded and extends in the process of producing the decorative molded article 10, it is possible to make the glossy layer 41 reflect light easily. The glossy layer 41 can easily reflect light that is not reflected by the second glossy layer 42. With the glossy layer 41 and the second glossy layer 42, the design layer 40 can easily form a design with greater depth. The decorative laminate 30 can display a more excellent design.

The glossy layer 41 and the second glossy layer 42 each include a colorant, and the content of the colorant in the glossy layer 41 is different from the content of the colorant in the second glossy layer 42. The design layer 40 can form a design with greater depth. The decorative laminate 30 can display a more excellent design.

The content of the colorant in the glossy layer 41 near the second surface 30B is higher than the content of the colorant in the second glossy layer 42 near the first surface 30A. The design layer 40 can form a design with greater depth. The decorative laminate 30 can display a more excellent design.

The decorative laminate 30 includes the concealing layer 35. With the concealing layer 35, another member provided on the second surface 30B of the decorative laminate 30 becomes less likely to be observed. With the concealing layer 35, the decorative laminate 30 can more clearly display a design formed by the design layer 40. The decorative laminate 30 can display a more excellent design.

The decorative laminate 30 includes the reflective layer 36. The reflective layer 36 can reflect light that is not reflected by the glossy layer 41. With the reflective layer 36, it is possible to make a design displayed by the decorative laminate 30 appropriate by adjusting the amount of light reflected by the decorative laminate 30. With the reflective layer 36, the design layer 40 can form a design with greater depth. The decorative laminate 30 can display a more excellent design.

The decorative laminate 30 includes the backer layer 37. With the backer layer 37, even when the decorative film 20 having the decorative laminate 30 is vacuum molded, it is possible to maintain the shape of the decorative laminate 30 so that the design displayed by the decorative laminate 30 may not be damaged. Even when the decorative molded article 10 is produced by using the decorative film 20 having the decorative laminate 30, it is possible to maintain the design displayed by the decorative laminate 30 to be an excellent design.

When the decorative film 20 having the decorative laminate 30 is vacuum molded, the decorative laminate 30 extends. For example, the decorative laminate 30 can extend so that the surface area thereof becomes 1.01 times to 5 times larger. When the design layer 40 extends, color irregularity may be generated in the color exhibited by the design layer 40. For example, when the decorative film 20 extends, the transmittance of the design layer 40 increases and the color of a layer below the design layer 40 becomes more likely to be reflected. The design displayed by the decorative laminate 30 may deteriorate. At least one of the backer layer 37, the bonding layer 38, and the base material layer 31 includes a colorant. Because at least one of the backer layer 37, the bonding layer 38, and the base material layer 31 is colored, color irregularity in the color exhibited by the design layer 40 can be reduced. It is possible to suppress deterioration of the design displayed by the decorative laminate 30. To be specific, in the design displayed by the decorative laminate 30, it is possible to make the value of the color difference ΔE*ab be 3.0 or less.

The value of ΔE*ab is, in the L*a*b* color space, a value calculated by ΔE*ab = [(ΔL*)² + (Δa*)² + (Δb*)²]^{1/2}, where ΔL* the difference in the value of L*, Δa* is the difference in the value of a*, and Δb* is the difference in the value of b* between two points on a target member.

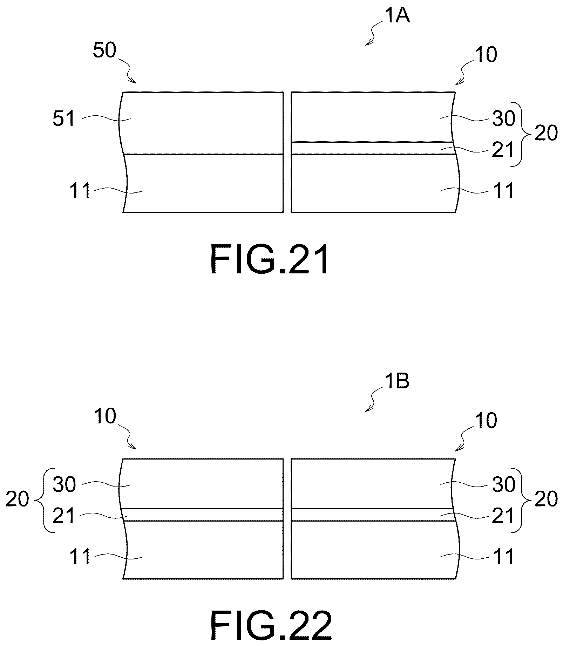

Fig. 21 illustrates a mobile body component 1A that the mobile body 1 has as a part of an exterior member or the like. The mobile body component 1A illustrated in Fig. 21 includes the decorative molded article 10 and a coating component 50. In the example illustrated in Fig. 21, the decorative molded article 10 and the coating component 50 are next to each other in the mobile body component 1A. As illustrated in Fig. 21, the decorative molded article 10 includes the decorative film 20 and the molded portion 11 joined to the decorative film 20. The coating component 50 includes a molded portion 11 that is different from the molded portion 11 included in the decorative molded article 10, and a coating agent 51 applied to the molded portion 11. The coating component 50 displays a design by using the coating agent 51. The decorative molded article 10 can reduce color irregularity in the color exhibited by the design layer 40, because at least one of the backer layer 37, the bonding layer 38, and the base material layer 31 included in the decorative laminate 30 is colored. Thus, it is possible to make the color difference between the decorative laminate 30 and the coating component 50 inconspicuous. To be specific, it is possible to make the value of the color difference ΔE*ab between the design displayed by the decorative laminate 30 and the design displayed by the coating component be 3.0 or less.

Fig. 22 illustrates a mobile body component 1B that the mobile body 1 has as a part of an exterior member or the like. The mobile body component 1B illustrated in Fig. 22 has two different decorative molded articles 10. In the example illustrated in Fig. 22, the two decorative molded articles 10 are adjacent to each other in the mobile body component 1B. The illustrated two decorative molded articles 10 each include the decorative film 20 and the molded portion 11 that is joined to the decorative film 20. In the illustrated mobile body component 1B, the decorative film 20 included in one of the two decorative molded articles 10 differs from the decorative film 20 included in the other of the two decorative molded articles 10. The molded portion 11 included in one of the two decorative molded articles 10 differs from the molded portion 11 included in the other of the two decorative molded articles 10. The two decorative molded articles 10 can differ in the extension ratio when molded, in the technique for molding, or in the material of the molded portion 11. Because at least one of the backer layer 37, the bonding layer 38, and the base material layer 31 of the decorative molded article 10 included in the decorative laminate 30 is colored, the color irregularity in the color exhibited by the design layer 40 can be reduced. Thus, it is possible to make the difference in color between decorative laminates 30a and 30b inconspicuous. To be specific, it is possible to make the value of the color difference ΔE*ab between the designs displayed by the decorative laminates 30 included in the decorative molded articles 10 be 3.0 or less.

The decorative laminate 30 includes the cushioning layer 39. With the cushioning layer 39, it is possible to reduce an impact from the outside on another layer of the decorative laminate 30. It is possible to suppress peeling of the decorative film 20 having the decorative laminate 30 from the molded portion 11 due to an impact from the outside. It is possible to suppress deterioration of design displayed by the decorative laminate 30, which may be caused by breakage of the design layer 40 due to an impact from the outside.

When the joining layer 21 included in the decorative film 20 is a heat seal layer, the molded portion 11 and the joining layer 21 can be strongly joined to each other when the molded portion 11 is molded in the decorative film 20. When the molded portion 11 is provided on the decorative film 20 by insert molding, a heat seal layer can deform in accordance with the shape of the molded portion 11. The molded portion 11 and the joining layer 21 can be more strongly joined to each other.

When the joining layer 21 included in the decorative film 20 is a sticky layer, it is possible to join the decorative film 20 and the molded portion 11 in various ways, for example, by providing the molded portion 11 on the decorative film 20 by TOM molding, or by affixing the decorative film 20 to the molded portion 11.

The decorative film 20 includes the protective film 23. With the protective film 23, the surface layer 33 before a composition is cured can be protected. It is possible to suppress scratching of the surface layer 33 and entry of a foreign substance. It is possible to suppress deterioration of a design displayed by the decorative laminate 30 due to a scratch on the surface layer 33 or a foreign substance.

In a method for producing the decorative molded article 10, the content of the glossy material 41b in the glossy layer 41 is determined in accordance with the extension ratio by which the decorative laminate 30 extends in a step of vacuum molding the decorative laminate 30. Even when the decorative laminate 30 extends due to vacuum molding, the glossy layer 41 appropriately reflects light and exhibits gloss. In the decorative molded article 10, the decorative laminate 30 can appropriately display a design.

The decorative laminate 30 according to the present embodiment has the first surface 30A and the second surface 30B opposite to the first surface 30A. The decorative laminate 30 includes the base material layer 31, the surface layer 33 disposed nearer to the first surface 30A than the second surface 30B with respect to the base material layer 31, and the design layer 40 supported by the base material layer 31. The design layer 40 includes the glossy layer 41 including the glossy material 41b. With the decorative laminate 30 according to the present embodiment, the design layer 40 can form a design close to coating with paint by reflecting light with the glossy layer 41. It is possible to make the design displayed by the decorative laminate 30 closer to that of the design displayed by coating with paint. The decorative laminate 30 can display an excellent design. In the production of the decorative molded article 10, it is possible to reduce emission of volatile organic compounds and carbon dioxide.

While each embodiment has been described with reference to concrete examples, the concrete examples described above do not limit each embodiment. Each embodiment described above can be carried out in various other specific examples, and various omissions, replacements, changes, and additions can be performed without departing from the gist thereof.

### Reference Signs List

1 mobile body
10 decorative molded article
11 molded portion
20 decorative film
21 joining layer
23 protective film
30 decorative laminate
30A first surface
30B second surface
31 base material layer
33 surface layer
35 concealing layer
36 reflective layer
37 backer layer
38 bonding layer
39 cushioning layer
40 design layer
41 glossy layer
41b glossy material
41c colorant
42 second glossy layer
42b glossy material
43 coloring layer
43c colorant
45 transparent layer

## Claims

1. A decorative laminate having a first surface and a second surface opposite to the first surface, comprising:
a base material layer;
a surface layer disposed nearer to the first surface than the second surface with respect to the base material layer; and
a design layer supported by the base material layer,
wherein the design layer includes a glossy layer including a glossy material.

2. The decorative laminate according to claim 1, wherein a thickness of the glossy layer is 100 µm or less.

3. The decorative laminate according to claim 1, wherein the glossy layer further includes a colorant.

4. The decorative laminate according to claim 1, wherein the design layer further includes a coloring layer including a colorant.

5. The decorative laminate according to claim 4, wherein the design layer further includes a transparent layer disposed between the coloring layer and the glossy layer.

6. The decorative laminate according to claim 1, wherein the design layer further includes a second glossy layer superposed on the glossy layer and including a glossy material.

7. The decorative laminate according to claim 6, wherein a content of the glossy material in the glossy layer differs from a content of the glossy material in the second glossy layer.

8. The decorative laminate according to claim 6,
wherein the glossy layer is disposed nearer to the second surface than the first surface with respect to the second glossy layer, and
wherein a content of the glossy material in the second glossy layer is lower than a content of the glossy material in the glossy layer.

9. The decorative laminate according to claim 6,
wherein the glossy layer includes a colorant,
wherein the second glossy layer includes a colorant, and
wherein a content of the colorant in the glossy layer differs from a content of the colorant in the second glossy layer.

10. The decorative laminate according to claim 9,
wherein the glossy layer is disposed nearer to the second surface than the first surface with respect to the second glossy layer, and
wherein the content of the colorant in the second glossy layer is lower than the content of the colorant in the glossy layer.

11. The decorative laminate according to claim 1, further comprising a concealing layer disposed nearer to the second surface than the first surface with respect to the design layer.

12. The decorative laminate according to claim 1, further comprising a reflective layer disposed nearer to the second surface than the first surface with respect to the design layer.

13. The decorative laminate according to claim 1, further comprising a backer layer disposed nearer to the second surface than the first surface with respect to the design layer.

14. The decorative laminate according to claim 13, wherein the backer layer includes a colorant.

15. The decorative laminate according to claim 14, wherein a color exhibited by the backer layer is a color of the same hue as or a color similar to a color exhibited by the design layer.

16. The decorative laminate according to claim 13, further comprising a bonding layer disposed between the backer layer and the design layer.

17. The decorative laminate according to claim 16, wherein the bonding layer includes a colorant.

18. The decorative laminate according to claim 1, wherein the base material layer includes a colorant.

19. The decorative laminate according to claim 1, further comprising a cushioning layer disposed nearer to the second surface than the first surface with respect to the surface layer.

20. A decorative laminate having a first surface and a second surface opposite to the first surface, comprising:
a base material layer;
a design layer disposed nearer to the second surface than the first surface with respect to the base material layer and supported by the base material layer; and
a backer layer disposed nearer to the second surface than the first surface with respect to the design layer,
wherein the design layer includes a coloring layer including a colorant and a glossy layer including a glossy material,
wherein the backer layer includes a colorant, and
wherein a color exhibited by the backer layer is a color of the same hue as or a color similar to a color exhibited by the coloring layer.

21. A decorative film comprising:
the decorative laminate according to claim 1; and
a joining layer provided on the second surface of the decorative laminate.

22. The decorative film according to claim 21, wherein the joining layer is a heat seal layer.

23. The decorative film according to claim 21, wherein the joining layer is a sticky layer.

24. A decorative film comprising:
the decorative laminate according to claim 1; and
a protective film provided on the first surface of the decorative laminate.

25. A decorative molded article comprising:
the decorative laminate according to claim 1; and
a molded portion disposed nearer to the second surface than the first surface.

26. A mobile body component comprising:
the decorative molded article according to claim 25; and
a coating component adjacent to the decorative molded article.

27. A mobile body component comprising:
two decorative molded articles each according to claim 25,
wherein the two decorative molded articles differ from each other in at least one of an extension ratio when molded, a technique for molding, or a material of the molded portion.

28. A mobile body comprising the decorative molded article according to claim 25.

29. A decorative laminate having a first surface and a second surface opposite to the first surface, comprising:
a base material layer;
a surface layer disposed nearer to the first surface than the second surface with respect to the base material layer; and
a design layer supported by the base material layer,
wherein the design layer includes a coloring layer including a colorant.

30. A method for producing a decorative laminate, comprising:
a step of forming a glossy layer including a glossy material on a base material layer by printing or application; and
a step of forming a surface layer that forms a first surface.

31. A method for producing a decorative molded article, comprising:
a step of vacuum molding a decorative laminate produced by using the method according to claim 30; and
a step of forming a molded portion nearer to a second surface than a first surface of the decorative laminate, the second surface being opposite to the first surface,
wherein a content of the glossy material in the glossy layer is determined in accordance with an extension ratio by which the decorative laminate extends in the step of vacuum molding the decorative laminate.
